# EUROPEAN PATENT APPLICATION

(11) **EP 2 292 093 A1**
(43) Date of publication of application: **09.03.2011**
(21) Application number: 10177934.6
(22) Date of filing: 23.03.2007
(51) Int. Cl.: A01N 47/06, A01N 43/38, A01P 7/00, A01P 5/00, A01N 25/00

(54) **Use of tetramic acid derivatives for controlling pests by dipping application**

(30) Priority: 28.03.2006 DE 102006014653
(62) Divisional of application: 07753794.2
(71) Applicant: Bayer CropScience AG, 40789 Monheim (DE)
(72) Inventor: Macom, Thomas, 27540 Holly Springs (US); Fischer, Reiner, Dr., 40789 Monheim (DE); Baron, Gerhard, 51377 Leverkusen (DE); Sanwald, Erich, Dr., 24159 Kiel (DE); Royalty, Reed, Nathan, Cary, North Carolina 27709 (US); van Waetermeulen, Xavier, Alain, Marie, 69480 Morance (FR); Reckmann, Udo, Dr., 51063 Köln (DE); Gladbach, Alexandra, 51371 Leverkusen (DE); Krueger, Stephen, PhD, Raleigh, North Carolina 27609 (US); Marczok, Peter, 50739 Köln (DE)

(57) **Abstract**

Compounds of the formula (I) 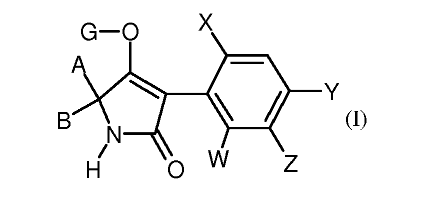 in which A, B, G, W, X, Y and Z can have the meanings given in the description are highly suitable for controlling animal pests such as insects and/or spider mites and/or nematodes by drip application.

## Description

The present invention relates to the use of tetramic acid derivatives for controlling insects and/or spider mites and/or nematodes by drenching, drip application, dip application or soil injection.

The insecticidal and acaricidal activity of tetramic acid derivatives following spray application is disclosed in EP-A-456 063, EP-A-521 334, EP-A-596 298, EP-A-613 884, WO 95/01 997, WO 95/26 954, WO 95/20 572, EP-A-0 668 267, WO 96/25 395, WO 96/35 664, WO 97/01 535, WO 97/02 243, WO 97/36 868, WO 97/43 275, WO 98/05638, WO 98/06721, WO 98/25928, WO 99/16748, WO 99/24437, WO 99/43649, WO 99/48869 and WO 99/55673, WO 01/09092, WO 01/17972, WO 01/23354, WO 01/74770, WO 03/013249, WO 04/007 448, WO 04/024 688, WO 04/065 366, WO 04/080 962, WO 04/111 042, WO 05/044 791, WO 05/044 796, WO 05/048 710, WO 05/049 596 and WO 05/066 125, WO 05/092897, WO 06/000355, WO 06/029799, WO 06/056281, WO 06/056282, WO 06/077071, WO 06/089633 and DE-A-05051325.

Surprisingly, it has now been found that tetramic acid derivatives are also highly suitable for controlling insects and/or spider mites and/or nematodes by what is known in expert circles as drenching the soil, by what is known in expert circles as drip application onto the soil, by dipping roots, tubers or bulbs (referred to in expert circles as dip application), by hydroponic systems or by what is known in expert circles as soil injection.

Accordingly, the present invention relates to the use of tetramic acid derivatives for controlling insects and/or spider mites and/or nematodes by drenching the soil, as drip application onto the soil in irrigations systems, as dip application in the case of roots, tubers or bulbs or by soil injection. Furthermore, the present invention relates to these use forms on natural substrates (soil) or artificial substrates (for example rock wool, glass wool, quartz sand, gravel, expanded clay, vermiculite) in the open or in closed systems (for example greenhouses or under film mulch) and in annual crops (for example vegetables, spices, ornamentals) or perennial crops (for example citrus plants, fruits, tropical crops, spices, nuts, grapevines, conifers and ornamentals).

The crops to be protected which have only been described in general terms will be described in greater detail and specified hereinbelow. Thus, as regards the use, vegetables are understood as meaning for example fruiting vegetables and inflorescences as vegetables, for example bell peppers, chillies, tomatoes, aubergines, cucumbers, pumpkins, courgettes, broad beans, climbing and dwarf beans, peas, artichokes, maize;
but also leafy vegetables, head-forming lettuce, chicory, endives, various types of cress, of rocket, lamb's lettuce, iceberg lettuce, leeks, spinach, Swiss chard;
furthermore tuber vegetables, root vegetables and stem vegetables, for example celeriac/celery, beetroot, carrots, radish, horseradish, scorzonera, asparagus, beet for human consumption, palm hearts, bamboo shoots, furthermore bulb vegetables, for example onions, leeks, Florence fennel, garlic;
furthermore Brassica vegetables such as cauliflower, broccoli, kohlrabi, red cabbage, white cabbage, curly kale, Savoy cabbage, Brussels sprouts, Chinese cabbage.

Regarding the use, perennial crops are understood as meaning citrus, such as, for example, oranges, grapefruits, tangerines, lemons, limes, Seville oranges, cumquats, satsumas;
but also pome fruit such as, for example, apples, pears and quinces, and stone fruit such as, for example, peaches, nectarines, cherries, plums, quetsch, apricots;
furthermore grapevines, hops, olives, tea and tropical crops such as, for example, mangoes, papayas, figs, pineapples, dates, bananas, durians, kaki fruit, coconuts, cacao, coffee, avocados lychees, maracujas, guavas,
moreover almonds and nuts such as, for example, hazelnuts, walnuts, pistachios, cashew nuts, para nuts, pecan nuts, butternuts, chestnuts, hickory nuts, macadamia nuts, peanuts,
moreover also soft fruit such as, for example, currants, gooseberries, raspberries, blackberries, blueberries, strawberries, cranberries, kiwi fruit, American cranberries.

As regards the use, ornamentals are understood as meaning annual and perennial plants, for example cut flowers such as, for example, roses, carnations, gerbera, lilies, marguerites, chrysanthemums, tulips, narcissus, anemones, poppies, amaryllis, dahlias, azaleas, hibiscus,
but also for example border plants, pot plants and perennials such as, for example, roses, Tagetes, violas, geraniums, fuchsias, hibiscus, chrysanthemum, busy lizzie, cyclamen, African violet, sunflowers, begonias,
furthermore for example bushes and conifers such as, for example, ficus, rhododendron, firs, spruces, pines, yews, juniper, umbrella pines, oleander.

As regards the use, spices are understood as meaning annual and perennial plants such as, for example, aniseed, chilli pepper, paprika, pepper, vanilla, marjoram, thyme, cloves, juniper berries, cinnamon, tarragon, coriander, saffron, ginger.

The tetramic acid derivatives are compounds of the formula (I) 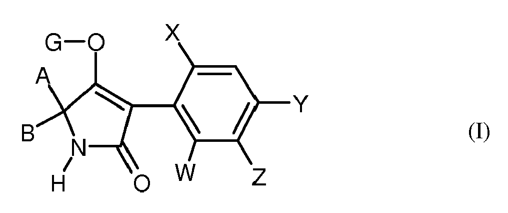 in which
- X: represents halogen, alkyl, alkoxy, haloalkyl, haloalkoxy or cyano,
- W, Y and Z: independently of each other represent hydrogen, halogen, alkyl, alkoxy, haloalkenyl, haloalkoxy or cyano,
- A: represents hydrogen, or represents in each case optionally halogen-substituted alkyl, alkoxyalkyl, saturated, optionally substituted cycloalkyl in which optionally at least one ring atom is replaced by a hetero atom,
- B: represents hydrogen or alkyl, or
- A and B: together with the carbon atom to which they are bonded represent a saturated or unsaturated, unsubstituted or substituted cycle which optionally contains at least one hetero atom,
- G: represents hydrogen (a) or one of the groups 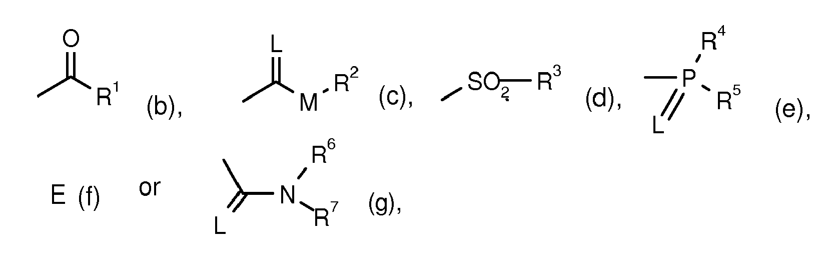 in which
E represent a metal ion or an ammonium ion,
L represents oxygen or sulphur,
M represents oxygen or sulphur,
R¹ represents in each case optionally halogen-substituted alkyl, alkenyl, alkoxyalkyl, alkylthioalkyl, polyalkoxyalkyl or optionally halogen-, alkyl- or alkoxy-substituted cycloalkyl which can be interrupted by at least one hetero atom, in each case optionally substituted phenyl, phenylalkyl, hetaryl, phenoxyalkyl or hetaryloxyalkyl,
R² represents in each case optionally halogen-substituted alkyl, alkenyl, alkoxyalkyl, polyalkoxyalkyl or in each case optionally substituted cycloalkyl, phenyl or benzyl,
R³ represents optionally halogen-substituted alkyl or optionally substituted phenyl,
R⁴ and R⁵ independently of one another represent in each case optionally halogensubstituted alkyl, alkoxy, alkylamino, dialkylamino, alkylthio, alkenylthio, cycloalkylthio, or represent in each case optionally substituted phenyl, benzyl, phenoxy or phenylthio, and
R⁶ and R⁷ independently of one another represent hydrogen, in each case optionally halogen-substituted alkyl, cycloalkyl, alkenyl, alkoxy, alkoxyalkyl, optionally substituted phenyl, optionally substituted benzyl or, together with the N atom to which they are bonded, represent an optionally substituted ring which is optionally interrupted by oxygen or sulphur,
in the form of their isomer mixtures or their pure isomers.

Tetramic acid derivatives of the abovementioned formula (I) which can preferably be employed are those in which the radicals have the following meanings:
- W: preferably represents hydrogen, C₁-C₄-alkyl, C₁-C₄-alkoxy, chlorine, bromine or fluorine,
- X: preferably represents C₁-C₄-alkyl, C₁-C₄-alkoxy, C₁-C₄-haloalkyl, fluorine, chlorine or bromine,
- Y and Z: independently of one another preferably represent hydrogen, C₁-C₄-alkyl, halogen, C₁-C₄-alkoxy or C₁-C₄-haloalkyl,
- A: preferably represents hydrogen or in each case optionally halogen-substituted C₁-C₆-alkyl or C₃-C₈-cycloalkyl,
- B: preferably represents hydrogen, methyl or ethyl,
- A,B: and the carbon atom to which they are bonded preferably represent saturated C₃-C₆-cycloalkyl in which one ring member is optionally replaced by oxygen or sulphur and which is optionally monosubstituted or disubstituted by C₁-C₄-alkyl, trifluoromethyl or C₁-C₄-alkoxy,
- G: preferably represents hydrogen (a) or one of the groups 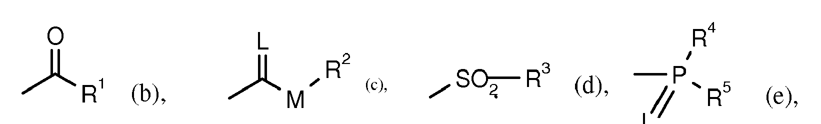 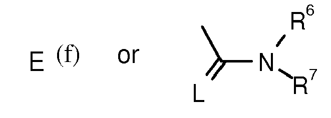 (g) in particular (a), (b), (c) or (g) in which
E represents a metal ion or an ammonium ion,
L represents oxygen or sulphur and
M represents oxygen or sulphur,
- R¹: preferably represents in each case optionally halogen-substituted C₁-C₁₀-alkyl, C₂-C₁₀-alkenyl, C₁-C₄-alkoxy-C₁-C₄-alkyl, C₁-C₄-alkylthio-C₁-C₄-alkyl, or represents C₃-C₆-cycloalkyl which is optionally substituted by fluorine, chlorine, C₁-C₄-alkyl or C₁-C₂-alkoxy,
or represents phenyl which is optionally substituted by fluorine, chlorine, bromine, cyano, nitro, C₁-C₄-alkyl, C₁-C₄-alkoxy, trifluoromethyl or trifluoromethoxy,
or represents pyridyl or thienyl, each of which is optionally substituted by chlorine or methyl,
- R²: preferably represents in each case fluorine- or chlorine-substituted C₁-C₁₀-alkyl, C₂-C₁₀-alkenyl, C₁-C₄-alkoxy-C₂-C₄-alkyl,
or represents optionally methyl- or methoxy-substituted C₅-C₆-cycloalkyl, or
represents phenyl or benzyl, each of which is optionally substituted by fluorine, chlorine, bromine, cyano, nitro, C₁-C₄-alkyl, C₁-C₄-alkoxy, trifluoromethyl or trifluoromethoxy,
- R³: preferably represents optionally fluorine-substituted C₁-C₄-alkyl, or represents phenyl which is optionally substituted by fluorine, chlorine, bromine, C₁-C₄-alkyl, C₁-C₄-alkoxy, trifluoromethyl, trifluoromethoxy, cyano or nitro,
- R⁴: preferably represents in each case optionally fluorine- or chlorine-substituted C₁-C₄-alkyl, C₁-C₄-alkoxy, C₁-C₄-alkylamino, C₁-C₄-alkylthio or represents phenyl, phenoxy or phenylthio, each of which is optionally substituted by fluorine, chlorine, bromine, nitro, cyano, C₁-C₄-alkoxy, trifluoromethoxy, C₁-C₄-alkylthio, C₁-C₄-haloalkylthio, C₁-C₄-alkyl or trifluoromethyl,
- R⁵: preferably represents C₁-C₄-alkoxy or C₁-C₄-thioalkyl,
- R⁶: preferably represents C₁-C₆-alkyl, C₃-C₆-cycloalkyl, C₁-C₆-alkoxy, C₃-C₆-alkenyl or C₁-C₄-alkoxy-C₁-C₄-alkyl,
- R⁷: preferably represents C₁-C₆-alkyl, C₃-C₆-alkenyl or C₁-C₄-alkoxy-C₁-C₄-alkyl,
- R⁶ and R⁷: together preferably represent an optionally methyl- or ethyl-substituted C₃-C₆-alkylene radical in which one carbon atom is optionally replaced by oxygen or sulphur,
in the form of their isomer mixtures or their pure isomers.

Tetramic acid derivatives of the abovementioned formula (I) which can especially preferably be employed are those in which the radicals have the following meanings:
- W: especially preferably represents hydrogen, methyl, ethyl, chlorine, bromine or methoxy,
- X: especially preferably represents chlorine, bromine, methyl, ethyl, propyl, i-propyl, methoxy, ethoxy or trifluoromethyl,
- Y and Z: especially preferably independently of one another represent hydrogen, fluorine, chlorine, bromine, methyl, ethyl, propyl, i-propyl, trifluoromethyl or methoxy,
- A: especially preferably represents methyl, ethyl, propyl, i-propyl, butyl, i-butyl, sec-butyl, tert-butyl, cyclopropyl, cyclopentyl or cyclohexyl,
- B: especially preferably represents hydrogen, methyl or ethyl, or
- A,B: and the carbon atom to which they are bonded especially preferably represent saturated C₆-cycloalkyl in which one ring member is optionally replaced by oxygen and which is optionally monosubstituted by methyl, ethyl, trifluoromethyl, methoxy, ethoxy, propoxy or butoxy,
- G: especially preferably represents hydrogen (a) or one of the groups 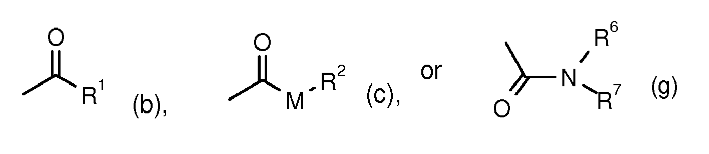 in which
- M: represents oxygen or sulphur,
- R¹: especially preferably represents C₁-C₈-alkyl, C₂-C₄-alkenyl, methoxymethyl, ethoxymethyl, ethylthiomethyl, cyclopropyl, cyclopentyl or cyclohexyl, or represents phenyl which is optionally monosubstituted to disubstituted by fluorine, chlorine, bromine, cyano, nitro, methyl, ethyl, methoxy, trifluoromethyl or trifluoromethoxy, or represents pyridyl or thienyl, each of which is optionally substituted by chlorine or methyl,
- R²: especially preferably represents C₁-C₈-alkyl, C₂-C₄-alkenyl, methoxyethyl, ethoxyethyl, or represents phenyl or benzyl,
- R⁶ and R⁷: independently of one another especially preferably represent methyl or ethyl or together represent a C₅-alkylene radical in which the C₃-methylene group is replaced by oxygen,
in the form of their isomer mixtures or their pure isomers.

Tetramic acid derivatives of the abovementioned formula (I) which can very especially preferably be employed are those in which the radicals have the following meanings:
- W: very especially preferably represents hydrogen or methyl,
- X: very especially preferably represents chlorine, bromine or methyl,
- Y and Z: independently of one another very especially preferably represent hydrogen, chlorine, bromine or methyl,
- A, B: and the carbon atom to which they are bonded very especially preferably represent saturated C₆-cycloalkyl in which one ring member is optionally replaced by oxygen and which is optionally monosubstituted by methyl, trifluoromethyl, methoxy, ethoxy, propoxy or butoxy,
- G: very especially preferably represents hydrogen (a) or one of the groups 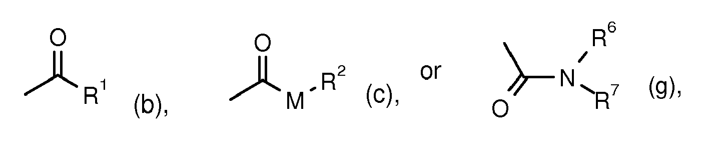 in which
- M: represents oxygen or sulphur,
- R¹: very especially preferably represents C₁-C₈-alkyl, C₂-C₄-alkenyl, methoxymethyl, ethoxy-methyl, ethylthiomethyl, cyclopropyl, cyclopentyl, cyclohexyl or
represents phenyl which is optionally monosubstituted by fluorine, chlorine, bromine, methyl, methoxy, trifluoromethyl, trifluoromethoxy, cyano or nitro,
or represents pyridyl or thienyl, each of which is optionally substituted by chlorine or methyl,
- R²: very especially preferably represents C₁-C₈-alkyl, C₂-C₄-alkenyl, methoxyethyl, ethoxy-ethyl, phenyl or benzyl,
- R⁶ and R⁷: independently of one another very especially preferably represent methyl or ethyl or together represent a C₅-alkylene radical in which the C₃-methylene group is replaced by oxygen
in the form of their isomer mixtures or their pure isomers.

Tetramic acid derivatives of the abovementioned formula (I) which can especially preferably be employed are those in which the radicals have the following meanings:

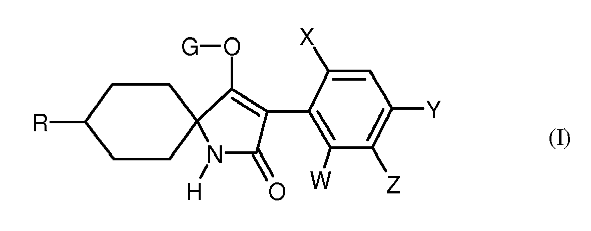

| **Example No**. | **W** | **X** | **Y** | **Z** | **R** | **G** | **M.p.°C** |
|---|---|---|---|---|---|---|---|
| I-1 | H | Br | H | CH₃ | OCH₃ | CO-i-C₃H₇ | 122 |
| 1-2 | H | Br | H | CH₃ | OCH₃ | CO₂-C₂H₅ | 140 - 142 |
| 1-3 | H | CH₃ | H | CH₃ | OCH₃ | H | > 220 |
| 1-4 | H | CH₃ | H | CH₃ | OCH₃ | CO₂-C₂H₅ | 128 |
| 1-5 | CH₃ | CH₃ | H | Br | OCH₃ | H | > 220 |
| 1-6 | CH₃ | CH₃ | H | Cl | OCH₃ | H | 219 |
| 1-7 | H | Br | CH₃ | CH₃ | OCH₃ | CO-i-C₃H₇ | 217 |
| 1-8 | H | CH₃ | Cl | CH₃ | OCH₃ | CO₂C₂H₅ | 162 |
| 1-9 | CH₃ | CH₃ | CH₃ | CH₃ | OCH₃ | H | >220 |
| I-10 | CH₃ | CH₃ | H | Br | OC₂H₅ | CO-i-C₃H₇ | 212 - 214 |
| I-11 | H | CH₃ | CH₃ | CH₃ | OC₂H₅ | CO-n-C₃H₇ | 134 |
| 1-12 | H | CH₃ | CH₃ | CH₃ | OC₂H₅ | CO-i-C₃H₇ | 108 |
| 1-13 | H | CH₃ | CH₃ | CH₃ | OC₂H₅ | CO-c-C₃H₅ | 163 |

in the form of their cis/trans isomer mixtures or their pure cis isomers.

The compounds of the formula (I) are known compounds whose preparation has been described in the patents/patent applications which have been cited at the outset (see especially WO 97/01535, WO 97/36868 and WO 98/05 638).

Compounds whose use must be emphasized are the compounds 1-3 and 1-4 as the pure cis isomers (WO 04/007448).

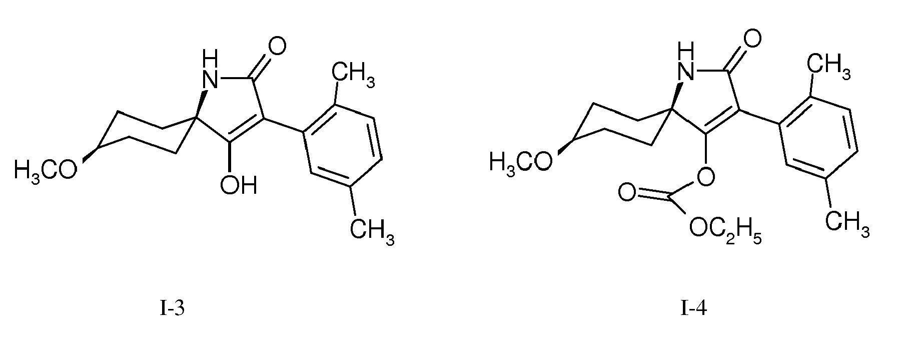

The tetramic acid derivatives can be applied in accordance with the invention on their own, but also in combination with other insecticidal and/or acaricidal active substances. The use according to the invention of the tetramic acid derivatives extends to a wide range of different animal pests. These include:

From the order of the Anoplura (Phthiraptera), for example Damalinia spp., Haematopinus spp., Linognathus spp., Pediculus spp., Trichodectes spp..

From the class of the Arachnida, for example Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

From the class of the Bivalva, for example Dreissena spp..

From the order of the Chilopoda, for example Geophilus spp., Scutigera spp..

From the order of the Coleoptera, for example Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..

From the order of the Collembola, for example Onychiurus armatus.

From the order of the Dermaptera, for example Forficula auricularia.

From the order of the Diplopoda, for example Blaniulus guttulatus.

From the order of the Diptera, for example Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

From the class of the Gastropoda, for example Arion spp., Biomphalaria spp., Bulinus spp., Deroceras spp., Galba spp., Lymnaea spp., Oncomelania spp., Succinea spp..

From the class of the Helminthes, for example Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Protozoans such as Eimeria can also be controlled.

From the order of the Heteroptera, for example Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

From the order of the Homoptera, for example Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

From the order of the Hymenoptera, for example Diprion spp., Hoplocampa spp., Lasius spp., Monomorium pharaonis, Vespa spp..

From the order of the Isopoda, for example Armadillidium vulgare, Oniscus asellus, Porcellio scaber.

From the order of the Isoptera, for example Reticulitermes spp., Odontotermes spp..

From the order of the Lepidoptera, for example Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

From the order of the Orthoptera, for example Acheta domesticus, Blatta orientalis, Blattella germanica, Gryllotalpa spp., Leucophaea maderae, Locusta spp., Melanoplus spp., Periplaneta americana, Schistocerca gregaria.

From the order of the Siphonaptera, for example Ceratophyllus spp., Xenopsylla cheopis.

From the order of the Symphyla, for example Scutigerella immaculata.

From the order of the Thysanoptera, for example Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

From the order of the Thysanura, for example Lepisma saccharina.

The plant-parasitic nematodes include, for example, Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

From the class of the Arachnida, for example Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Among the family of the Pemphigidae, the following are preferred: Eriosoma spp., Pemphigus spp., Anuraphis spp., Brachycaudus spp., in crops such as, for example, pome fruit, conifers, vegetables and ornamentals.

From the psyllid family (Psyllidae), the following are preferred: Psylla spp., Paratrioza spp., Trioza spp., in crops such as, for example, citrus, vegetables, potatoes, pome fruit.

From the scale insect family (Coccidae), the following are preferred: Ceroplastes spp., Drosicha spp. Pulvinaria spp., Protopulminaria spp., Saissetia spp., Coccus spp., in perennial crops such as, for example, citrus, grapevines, tea, pome and stone fruit, tropical crops, ornamentals, conifers, but also vegetables.

From the family of the Diaspididae, the following are preferred: Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in crops such as, for example, citrus, tea, ornamentals, conifers, pome and stone fruit, grapevines, tropical crops.

From the family of the Pseudococcidae, the following are preferred: Pericerga, Pseudococcus spp., Planococcus spp., Phenacoccus spp., Dysmicoccus spp., in crops such as, for example, citrus, pome and stone fruit, tea, grapevines, vegetables, ornamentals, conifers, spices and tropical crops.

Furthermore preferred are the following from the family of the Aleyrodidae: Bemisia argentifolii, Bemisia tabaci, Trialeurodes vaporariorum, Aleurothrixus floccosus, Aleurodes spp., Dialeurodes spp., Parabemisia myricae in crops such as, for example, vegetables, melons, potatoes, tobacco, soft fruit, citrus, ornamentals, conifers, cotton, potatoes and tropical crops.

Furthermore preferred are the following from the family of the Aphidae:
- Myzus spp.: in tobacco, stone fruit, pome fruit, soft fruit, Brassica vegetables, fruiting vegetables, leafy vegetables, tuber and root vegetables, melons, potatoes, spices, ornamentals and conifers.
- Aphis spp.: in cotton, tobacco, citrus, melons, beet, soft fruit, oilseed rape, fruiting vegetables, leafy vegetables, Brassica vegetables, tuber and root vegetables, ornamentals, potatoes, pumpkins, spices.
- Rhodobium porosum: in strawberries,
- Nasonovia ribisnigri: in leafy vegetables,
- Macrosiphum spp.: in ornamentals, cereals, potatoes, leafy vegetables, Brassica vegetables and fruiting vegetables, strawberries,
- Phorodon humuli: in hops,
- Toxoptera spp.: in citrus, stone fruit, almonds, nuts, cereals, spices,
- Aulacorthum spp.: in citrus, potatoes, fruiting vegetables and leafy vegetables.

Preferred are furthermore the following from the family of the Tetranychidae:
Tetranychus spp., Brevipalpus spp., Panonychus spp., Oligonychus spp., Eotetranychus spp., Bryobia spp. in crops such as, for example, vegetables, ornamentals, spices, conifers, citrus, stone and pome fruit, grapevines, cotton, soft fruit, melons, potatoes.

The following are preferred from the family of the Tarsonemidae:
Hermitarsonemus batus, Stenotarsonemus spp., Polyphagotarsonemus spp., Stenotarsonemus spinky in crops such as, for example, vegetables, ornamentals, spices, conifers, tea, citrus, melons.

Furthermore preferred are the following from the thrips family (Thripidae): Anaphothrips spp., Baliothrips spp., Caliothrips spp., Frankliniella spp., Heliothrips spp., Hercinothrips spp., Rhipiphorothrips spp., Scirtothrips spp., Selenothrips spp. and Thrips spp., in crops such as, for example, fruit, cotton, grapevines, soft fruit, vegetables, melons, ornamentals, spices, conifers, tropical crops, tea.

Also preferred are the following from the whitefly family (Agromyzidae): Liriomyza spp., Pegomya spp. in crops such as, for example, vegetables, melons, potatoes and ornamentals.

Also preferred are the following from the foliar nematode family (Aphelenchoididae), for example Aphelenchoides ritzemabosi, A. fragariae, A. besseyi, A. blastophthorus in crops such as soft fruits and ornamentals.

The invention is illustrated by the examples which follow. These are not to be construed in any way as limiting.

### Use examples

### Aphididae and Pemphigidae

Very especially preferred is the control of the following species from the family of the Aphididae and the Pemphigidae in the following crops:

| | |
|---|---|
| Myzus persicae | in fruiting and leafy vegetables such as, for example, bell peppers, beans, aubergine, tomatoes, melons, head-forming lettuce; potatoes, strawberries, in ornamentals such as, for example, roses, in Brassica vegetables such as, for example, broccoli and white cabbage; conifers, spices such as, for example, chilli pepper; tobacco, pome fruit, stone fruit |
| Aphis gossypii | in citrus such as, for example, oranges, tangerines, grapefruits, in fruiting vegetables such as, for example, cucumbers, pumpkins, aubergine, melons; strawberries, spices, potatoes, beet, in ornamentals such as, for example, roses; conifers, cotton |
| Aphis craccivora | in ornamentals such as, for example, violets; fruiting vegetables such as, for example, peas |
| Aphis fabae | in fruiting vegetables such as, for example, beans, peas; in tuber, root and stem vegetables such as, for example, celery/celeriac |
| Rhodobium porosum | in strawberries |
| Nasonovia ribisnigri | in leafy vegetables such as, for example, head-forming lettuce |
| Macrosiphum rosae | in ornamentals such as, for example, roses |
| Macrosiphum euphorbiae | in leafy vegetables, fruiting vegetables and Brassica vegetables such as, for example, aubergines, lettuce, bell peppers, white cabbage, tomatoes; potatoes, strawberries |
| Phorodon humuli | in hops |
| Aulacorthum solani | in citrus such as, for example, oranges, tangerines, grapefruits, limes; in fruiting vegetables and leafy vegetables such as, for example, head-forming lettuce, tomatoes, bell peppers, aubergines; potatoes |
| Toxoptera citricola | in citrus such as, for example, oranges, tangerines, limes, grapefruits |
| Toxoptera citricida | in citrus such as, for example, oranges, tangerines, limes, grapefruits |
| Toxoptera aurantii | in citrus such as, for example, oranges, tangerines, grapefruits, limes; in spices such as, for example, pepper; in nuts such as, for example, cashew nuts |
| Toxoptera odinae | in citrus such as, for example, oranges, tangerines, grapefruits, limes; in spices such as, for example, pepper; in nuts such as, for example, cashew nuts |
| Pemphigus bursarius, | in ornamentals such as, for example, chrysanthemums; in vegetables such as, for example, head-forming lettuce |
| Pemphigus fuscicornis | in beet, leaf vegetables such as, for example, head-forming lettuce, root vegetables such as, for example, carrots, ornamentals such as, for example, chrysanthemums |
| Anuraphis cardui | in vegetables such as, for example, artichokes |
| Brachycaudus helycrisii | in sunflowers |

### Example 1

In an irrigation experiment carried out in 0.5-1-pots, Chinese cabbage, Savoy cabbage, bell peppers and broad beans which had been potted three days earlier are watered, in two replications, with 50 ml of active substance solution containing the active substance 1-4 (cis isomer) at the application rates stated. The greenhouse temperature is 20°C. Infection with MYZUPE is accomplished seven and fourteen days after the application of the active substance. The test is evaluated in each case seven days after each infection by determining the activity with the aid of Abbott's formula.

**Active substance 1-4 (cis isomer)**

| Application rate (mg active substance/plant) | Abbott efficacy (%) against MYZUPE | | | | | | | |
|---|---|---|---|---|---|---|---|---|
| | Chinese cabbage | | Savoy cabbage | | Bell pepper | | Broad bean | |
| | 7d | 14 d | 7d | 14 d | 7d | 14 d | 7d | 14 d |
| 20 | 100 | 99 | 100 | 99 | 100 | 100 | 100 | 99 |
| 10 | 100 | 99 | 100 | 99 | 100 | 100 | 83 | 23 |

### Example 2

Cucumber plants cv. "Delikatess" which have been grown on rock wool are drenched, in six replications, one week after transplanting with in each case 100 ml active substance solution containing the active substance 1-4 (cis isomer, formulation: 240 SC) at the application rate stated. The greenhouse temperature is 20°C. Infection with APHIGO is accomplished in each case seven and fourteen days after the application of the active substance. The test is evaluated in each case seven days after each infection by determining the activity with the aid of Abbott's formula.

**Active substance 1-4 (cis isomer)**

| Application rate (mg active substance/plant) | Abbott efficacy (%) against APHIGO | |
|---|---|---|
| | 7d | 14 d |
| 40 | 100 | 99 |
| 20 | 100 | 96 |
| 10 | 100 | 91 |

### Example 3

Violet plants cv. "Ladies delight" (approximate height 15 cm) in 4-inch pots which had been infected with Aphis craccivora two weeks before the treatment are drenched, in four replications, with an active substance solution containing the active substance 1-4 (cis isomer, formulation: 240 SC) and, by way of comparison, with the commercial standard imidacloprid (240 SC) at the application rate stated. The greenhouse temperature is 27-33°C. The test is evaluated 7, 14, 22 and 35 days after the treatment by determining the activity against nymphs on the leaves with the aid of the Henderson-Tilton method.

**Active substance 1-4 (cis-isomer)**

| Application rate (mg active substance/l potting compost) | Henderson-Tilton efficacy (%) against Aphis craccivora | | | |
|---|---|---|---|---|
| | 7d | 14 d | 22 d | 35 d |
| Imidacloprid | 100 | 94 | 100 | 100 |
| 12 | | | | |
| 1-4 | 100 | 84 | 100 | 100 |
| 12 | | | | |

### Tetranychidae and Tarsonemidae

Furthermore very especially preferred is the control of the following species from the families Tetranychidae and Tarsonemidae in the following crops:

| | |
|---|---|
| Tetranychus urticae | in vegetables such as, for example, bell peppers, tomatoes, cucumbers, cabbage, for example broccoli, beans, lettuce, aubergines, courgettes, pumpkins, in soft fruit, for example strawberries, in melons, for example water melons, musk melons, Canteloupe melons in ornamentals such as, for example, roses, hibiscus, chrysanthemums, and in potatoes and in cotton, conifers |
| Tetranychus pacificus | |
| Tetranychus canadensis | |
| Tetranychus kanzawai | |
| Tetranychus cinnabarinus | |
| Eotetranychus carpini | in cotton, in vegetables such as, for example, bell peppers, tomatoes, cucumbers, beans, cucurbits, aubergines, courgettes, cabbage, leeks, onions, in soft fruit, in melons, for example water melons, musk melons, Canteloupe melons, in ornamentals such as, for example, roses, hibiscus, potatoes, grapevines, cotton, conifers |
| Eotetranychus willametti | |
| Eotetranychus banski | |
| Eotetranychus hicoriae | |
| Eotetranychus yumensis | |
| Oligonychus mexicanus | in vegetables such as, for example, tomatoes, bell peppers, beans, cucumbers, pumpkins, aubergines, in melons, and in ornamentals such as, for example, roses, hibiscus, azaleas, conifers |
| Oligonychus ilicis | |
| Oligonychus persea | |
| Oligonychus unungis | |
| Hemitarsonemus latus | in citrus such as, for example, oranges, lemons, grapefruits, tangerines, ornamentals, vegetables such as, for example, cucumbers, tomatoes, beans, aubergines, pumpkins; melons such as water melons, Canteloupe melons, spices such as chilli; tea, conifers |
| Stenotarsonemus laticeps | |
| Polyphagotarsonemus latus | |

### Example 4

Aubergine plants (25 days after sowing) in 0.5-1-pots are drenched, in three replications, with 50 ml of active substance solution containing the active substance 1-4 (cis isomer, formulation: 240 SC) at the application rate stated. The greenhouse temperature is 20°C. Infection with Aphis gossypii (APHIGO), Myzus persicae (MYZUPE) and Tetranychus urticae (TETRUR) is accomplished in each case seven and fourteen days after the application of the active substance. The test is evaluated in each case seven days after each infection by determining the activity with the aid of Abbott's formula.

**Active substance 1-4 (cis isomer)**

| Application rate (mg active substance/plant) | Abbott efficacy (%) | | | | | |
|---|---|---|---|---|---|---|
| | against | | | | | |
| | APHIGO | | MYZUPE | | TETRUR | |
| | 7d | 14 d | 7d | 14 d | 7d | 14 d |
| 20 | 100 | no infection | 100 | 100 | 100 | 77 |
| 10 | 99 | no infection | 100 | 100 | 96 | 73 |

### Example 5

Gardenia plants cv. "Cape jasmine" in 6-inch pots which had been infected with Tetranychus urticae (TETRUR) two weeks before the beginning of the experiment are drenched, in three replications, with in each case 100 ml of active substance solution containing the active substance 1-4 (cis isomer, formulation: 240 SC) and, by way of comparison, with the commercial standard imidacloprid (240 SC) at the application rate stated. The greenhouse temperature is 25-30°C. The test is evaluated 3, 15 and 22 days after the treatment by determining the activity against nymphs on the leaves with the aid of the Henderson-Tilton method.

**Active substance 1-4 (cis isomer)**

| Application rate (mg active substance/ l potting compost) | Henderson-Tilton efficacy (%) against TETRUR | | |
|---|---|---|---|
| | 3d | 15 d | 22 d |
| Imidacloprid | 72.7 | 82.2 | 0 |
| 38.4 | | | |
| 1-4 | 39.0 | 89.1 | 100 |
| 77 | | | |

### Thrips (Thripidae)

Furthermore very especially preferred is the control of the following species from the thrips family (Thripidae) in the following crops:

| | |
|---|---|
| Frankliniella occidentalis | in vegetables such as, for example, bell peppers, tomatoes, cucumbers, cabbage, for example broccoli, beans, lettuce, aubergines, courgettes, pumpkins, in soft fruit, for example strawberries, in melons, for example water melons, musk melons, Canteloupe melons, in ornamentals such as roses, hibiscus, chrysanthemums and in potatoes and in tropical crops such as, for example, papayas, avocado, cotton, conifers |
| Frankliniella schultzei | |
| Frankliniella fusca | |
| Thrips palmi | in cotton, in vegetables such as, for example, bell peppers, tomatoes, cucumbers, beans, cucurbits, aubergines, courgettes, cabbage, leeks, onions, in soft fruit, in melons, for example water melons, musk melons, Canteloupe melons, in ornamentals such as, for example, roses, hibiscus, in tropical crops such as, for example, papayas, pineapples, bananas, potatoes, grape vines, cotton, rice, nuts, conifers |
| Thrips tabaci | |
| Thrips hawaiiensis | |
| Heliothrips | in vegetables such as, for example, tomatoes, bell peppers, beans, cucumbers, pumpkins, aubergines, in melons and in ornamentals such as, for example, roses, hibiscus, azaleas, tropical crops such as guavas, citrus such as, for example, lemons, oranges, grape vines, conifers |
| haemorrhoidalis | |
| Hercinothrips femoralis | ornamentals, vegetables such as, for example, beans |
| Hercinothrips bicinctus | |
| Hercinothrips phaseoli | |
| Caliothrips phaseoli | in vegetables such as, for example, beans, courgettes |
| Anaphothrips obscurus | Brassica vegetables such as, for example, white cabbage |
| Scirthothrips aurantii | in citrus such as, for example, oranges, lemons, grapefruits, tangerines, ornamentals, vegetables such as, for example, cucumbers, tomatoes, beans, aubergines, pumpkins; melons such as water melons, Canteloupe melons, spices such as chilli; tea |
| Scirthothrips dorsalis | |
| Scirthothrips citri | |

### Example 6

Verbena plants (approximate height 13 cm) in 6-inch-pots which are infected with Frankliniella occidentalis (FRANOC) are drenched, in four replications, with an active substance solution containing the active substance 1-4 (cis isomer, formulation: 240 SC) and, by way of comparison, with the commercial standard imidacloprid (240 SC) at the application rate stated. The greenhouse temperature is 27-33°C. The test is evaluated 7, 14, 21 and 28 days after the treatment by determining the activity against nymphs on the leaves with the aid of the Henderson-Tilton method.

**Active substance 1-4 (cis isomer)**

| Application rate (mg active substance/ l potting compost) | Henderson-Tilton efficacy (%) | | | |
|---|---|---|---|---|
| | against FRANOC | | | |
| | 7d | 14 d | 21 d | 28 d |
| Imidacloprid | 100 | 100 | 49 | 100 |
| 12 | | | | |
| 1-4 | 100 | 100 | 90 | 100 |
| 12 | | | | |

### Example 7

Plots approximately 5 m² in size and containing cucumber plants are drenched, in three replications, against Thrips palmi with an active substance solution containing the active substance 1-4 (cis isomer, formulation: 240 SC) and, by way of comparison, with the standard imidacloprid (100 SL) at the application rate stated, corresponding to an approximate water application rate of 300 l/ha. Two applications are effected at a 10-day interval. The test is evaluated in each case 9 days after the first treatment and 7 and 13 days after the second treatment by determining the efficacy with the aid of Abbott's formula.

**Active substance 1-4 (cis isomer)**

| Application rate (mg active substance/plant) | Abbott efficacy (%) | | |
|---|---|---|---|
| | against THRIPL | | |
| | 9d | 7d | 13 d |
| | after 1st treatm. | after 2nd treatm. | after 2nd treatm. |
| Imidacloprid | 73.7 | 68.8 | 44.0 |
| 20 | | | |
| 1-4 | 66.3 | 64.1 | 80.0 |
| 20 | | | |

### Whitefly (Aleyrodidae)

Furthermore very especially preferred is the control of the following species from the whitefly family (Aleyrodidae) in the following crops:

| | |
|---|---|
| Bemisia tabaci | in vegetables such as bell peppers, tomatoes, cucumbers, cabbage, for example broccoli, beans, lettuce, aubergines, courgettes, pumpkins, in soft fruits, in melons, for example water melons, musk melons, Canteloupe melons, in ornamentals such as roses, hibiscus, tropical sage, in cotton and in potatoes, in tobacco and in tropical crops such as, for example, papayas, bananas, |
| Bemisia argentifolii | in cotton, in vegetables such as bell peppers, tomatoes, cucumbers, beans, cucurbits, aubergines, courgettes, cabbage, in soft fruit, in melons, for example water melons, musk melons, Canteloupe melons, in ornamentals such as, for example, roses, hibiscus, tropical sage, in tropical crops such as, for example, papayas, bananas, |
| Trialeurodes vaporariorum | in vegetables such as tomato, bell pepper, beans, cucumbers, pumpkins, aubergines, courgettes, in soft fruit, in melons and in ornamentals such as, for example, roses, hibiscus, in conifers |
| Aleurothrixus floccosus | in citrus such as oranges, tangerines, lemons |
| Aleurodes citri | in citrus such as oranges, tangerines, lemons, grapefruits, limes, kumquats, |
| Aleurodes fragriae | in soft fruit such as, for example, strawberries |
| Aleurodes azaleae | in ornamentals such as, for example, azaleas |

### Example 8

Tropical sage plants cv. "scarlet sage" (approximate height 29 cm) in 6-inch pots and infested with Bemisia argentifolii (BEMIAR) are drenched, in three replications, with an active substance solution containing the active substance 1-4 (cis isomer, formulation: 240 SC) and, by way of comparison, with the commercial standard imidacloprid (240 SC) at the application rate stated. The greenhouse temperature is 27-33°C. The test is evaluated 9, 13, 20, 34 and 41 days after the treatment by determining the activity against nymphs on the leaves with the aid of the Henderson-Tilton method.

**Active substance 1-4 (cis isomer)**

| Application rate (mg active substance/ l potting compost) | Henderson-Tilton efficacy (%) | | | | |
|---|---|---|---|---|---|
| | against Bemisia argentifolii | | | | |
| | 9d | 13 d | 20 d | 34 d | 41 d |
| Imidacloprid | 94 | 100 | 95 | 94 | 100 |
| 12 | | | | | |
| 1-4 | 99 | 100 | 98 | 100 | 100 |
| 12 | | | | | |

### Example 9

Plots approximately 12 m² in size and containing courgette plants (47 days after sowing) are drenched, in three replications, against Trialeurodes vaporarium (TRIAVA) with 100 ml of an active substance solution per plant, containing the active substance 1-4 (cis isomer, formulation: 240 SC) and, by way of comparison, with the standard imidacloprid (200 SL) at the application rate stated. Four applications are effected at 10-day intervals. The test is evaluated 21, 31, 38 and 45 days after the 1st treatment by determining the efficacy with the aid of Abbott's formula.

**Active substance 1-4 (cis isomer)**

| Application rate (mg active substance/plant) | Abbott efficacy (%) | | | |
|---|---|---|---|---|
| | against TRIAVA | | | |
| | 21 d | 31 d | 38 d | 45 d |
| Imidacloprid | 88.1 | 74.0 | 77.2 | 63.7 |
| | | | | |
| 1st treatm. 10 | | | | |
| 2nd treatm. 10 | | | | |
| 3rd treatm. 10 | | | | |
| 4th treatm. 10 | | | | |
| 1-4 | 57.5 | 85.9 | 88.5 | 85.7 |
| | | | | |
| 1st treatm. 10 | | | | |
| 2nd treatm. 10 | | | | |
| 3rd treatm. 10 | | | | |
| 4th treatm. 10 | | | | |

### Example 10

In each case 12 tomato plants cv. "Briljant" on rock wool are treated, in four replications, with a drip application against Trialeurodes vaporarium (TRIAVA) with an active substance solution containing the active substance 1-4 (cis isomer, formulation: 100 OD) in comparison with the commercial standard imidacloprid (70 WG) at the application rate stated. The greenhouse temperature is 20°C. Three treatments are carried out at intervals of seven and fourteen days. The test is evaluated 14, 21, 28, 36 and 43 days after the 1st treatment by determining the efficacy with the aid of Abbott's formula.

**Active substance 1-4 (cis isomer)**

| Application rate (mg active substance/plant) | Abbott efficacy (%) | | | | |
|---|---|---|---|---|---|
| | against TRIAVA | | | | |
| | 14 d | 21 d | 28 d | 36 d | 43 d |
| Imidacloprid | 28.4 | 55.3 | 89.1 | 92.0 | 89.8 |
| 9.8 | | | | | |
| 1-4 | 26.8 | 66.3 | 90.4 | 95.6 | 97.9 |
| 20 | | | | | |

### Scale insects (Coccidae)

Very especially preferred is the control of the following species from the scale insect family (Coccidae) in the following crops, preferably by foliar application:

| | |
|---|---|
| Ceroplastes ceriferus | in citrus such as, for example, oranges, grapefruits, tangerines, lemons, limes, satsumas; tropical fruits such as, for example, mangos, guava |
| Ceroplastes floridensis | |
| Ceroplastes rubens | |
| Ceroplastes rusci | |
| Coccus viridis | in citrus such as, for example, oranges, tangerines, grapefruits, limes, lemons, satsumas, in tropical crops, for example pineapples; ornamentals, conifers |
| Coccus hesperdium | in tea, in vegetables such as, for example, beans, in grape vines; ornamentals |

### Example 11

Gardenia plants cv. "Cape jasmine" (seedlings, 28 cm) in 6-inch pots which are infected with Coccus viridis are drenched, in three replications, with 150 ml of active substance solution containing the active substance 1-4 (cis isomer, formulation: 240 SC) and, by way of comparison, with the commercial standard imidacloprid (240 SC) and dinotefuran (20 G) at the application rate stated. The greenhouse temperature is 27°C. The test is evaluated 7, 15, 21 and 35 days after the treatment by determining the activity against nymphs on the leaves with the aid of the Henderson-Tilton method.

**Active substance 1-4 (cis isomer)**

| Application rate (mg active substance/ l potting compost) | Henderson-Tilton efficacy (%) | | | |
|---|---|---|---|---|
| | against Coccus viridis | | | |
| | 7d | 15 d | 21 d | 35 d |
| Imidacloprid | 45 | 55 | 66 | 100 |
| 12 | | | | |
| 1-4 | 35 | 45 | 69 | 100 |
| 24 | | | | |
| Dinotefuran | 0 | 57 | 85 | 91 |
| 48 | | | | |

### Mealybugs and woollybugs (Pseudococcidae)

Very especially preferred is the control of the following species from the mealybug and woollybug family (Pseudococcidae) in the following crops:

| | |
|---|---|
| Pseudococcus citri | in citrus such as, for example, oranges, tangerines, grapefruits, limes, lemons, satsumas, in grape vines, in ornamentals, in tropical crops such as, for example, pineapples, spices such as, for example, chillis, conifers, vegetables such as, for example, bell peppers |
| Pseudococcus comstocki | |
| Pseudococcus maritimus | |
| Dysmicoccus boninsis | in tea, in tropical crops such as, for example, pineapples, guyabano, ornamentals, conifers |
| Dysmicoccus cryptus | |
| Dysmicoccus brevipes | |
| Planococcus lilacinus | in citrus such as, for example, oranges, tangerines, grapefruits, limes, lemons, satsumas, in grape vines, vegetables |
| Planococcus citri | |
| Phenacoccus maderensis | in ornamentals such as, for example, Coleus |

### Example 12

Coleus plants (approximate height 29 cm) in 6-inch pots which have been infected approximately 4 weeks before the treatment with citrus mealybug Pseudococcus citri (PSECCI) are drenched, in three replications, with an active substance solution containing the active substance 1-4 (cis isomer, formulation: 240 SC) and, by way of comparison, with the commercial standard imidacloprid (240 SC) at the application rate stated. The greenhouse temperature is 29°C. The test is evaluated 7, 14, 21 and 28 days after the treatment by determining the efficacy with the aid of Abbott's formula.

**Active substance 1-4 (cis isomer)**

| Application rate (mg active substance/l potting compost) | Abbott efficacy (%) | | | |
|---|---|---|---|---|
| | against PSECCI | | | |
| | 7d | 14 d | 21 d | 28 d |
| Imidacloprid | 30 | 35 | 19 | 16 |
| 12 | | | | |
| 1-4 | 63 | 91 | 94 | 93 |
| 24 | | | | |

### Example 13

Coleus plants (approximate height 29 cm) in 6-inch pots which have been infected approximately 4 weeks before the beginning of the experiment with Madeira mealybug (Phenacoccus madeirensis) are drenched, in three replications, with an active substance solution containing the active substance 1-4 (cis isomer, formulation: 240 SC) and, by way of comparison, with the commercial standard imidacloprid (240 SC) at the application rate stated. The greenhouse temperature is 29°C. The test is evaluated 7, 14, 21 and 28 days after the treatment by determining the efficacy with the aid of Abbott's formula.

**Active substance 1-4 (cis isomer)**

| Application rate (mg active substance/l potting compost) | Abbott efficacy (%) | | | |
|---|---|---|---|---|
| | against Phenacoccus madeirensis | | | |
| | 7d | 14 d | 21 d | 28 d |
| Imidacloprid | 92 | 83 | 30 | 44 |
| 12 | | | | |
| 1-4 | 84 | 89 | 99 | 98 |
| 12 | | | | |

### Leaf-mining flies (Agromyzidae)

Furthermore very especially preferred is the control of the following species from the family of the leaf-mining flies (Agromyzidae) in the following crops:

| | |
|---|---|
| Liriomyza brassicae | in vegetables such as bell peppers, tomatoes, cucumbers, cabbage, beans, lettuce, aubergines, courgettes, pumpkins, in melons, for example water melons, musk melons, Canteloupe melons, in ornamentals such as roses, hibiscus, and in potatoes |
| Liriomyza bryoniae | |
| Liriomyza cepae | |
| Liriomyza chilensis | |
| Liriomyza hunidobrensis | |
| Liriomyza sativae | |
| Liriomyza trifolie | |
| Liriomyza quadrata | |
| Pegomya hyoscyami | in beet, in vegetables and ornamentals |
| Pegomya spinaciae | |

### Example 14

Plots approximately 2 × 5 m in size which contain bell pepper plants are treated, in three replications, against Liriomyza sp.. The active substance example (1-4) cis isomer (240 SC) is drenched in an active substance solution at the application rate stated. The water application rate is 700 l/ha. Three treatments are carried out at intervals of 7 and 14 days. The test is evaluated in each case 7 days after the 2nd and 3rd treatment and 14 days after the 3rd treatment by scoring the kill rate of the larvae in the leaves.

| Active substance | Application rate (mg/plant) | Efficacy (% Abbott) | | |
|---|---|---|---|---|
| | | against Liriomyza sp. | | |
| | | 7 d after | 7 d after | 14 d after |
| | | 2nd treatment | 3rd treatment | 3rd treatment |
| Example (1-4) | 40+10+10 | 66.7 | 100 | 81.8 |

### Example 15

Plots approximately 2 × 5 m in size which contain bell pepper plants are treated, in three replications, against Bemisia sp.. The active substance example (1-4) cis isomer (240 SC) is drenched in an active substance solution at the application rate stated. The water application rate is 700 l/ha. Three treatments are carried out at intervals of 7 and 14 days. The test is evaluated in each case 7, 14, 21 and 28 days after the 3rd treatment by scoring the kill rate of the larvae on the leaves.

| Active substance | Application rate (mg/plant) | Efficacy (% Abbott) | | | |
|---|---|---|---|---|---|
| | | against Bemisia sp. | | | |
| | | 7 d after | 14 d after | 21 d after | 28 d after |
| | | 3rd treatm. | 3rd treatm. | 3rd treatm. | 3rd treatm. |
| Imidacloprid | 10.5 | 96.6 | 80.6 | 84.6 | 85.7 |
| Example (1-4) | 40 + 5 + 5 | 86.2 | 94.4 | 94.9 | 90.5 |

### Foliar nematodes (Aphelenchoididae)

Furthermore very especially preferred is the control of the following species from the family of foliar nematodes (Aphelenchoididae) in the following crops:
Aphelenchoides ritzemabosi in ornamentals and strawberries
Aphylenchoides fragariae
Aphylenchoides besseyi
Aphylenchoides blastophthorus

### Example 16

The bulbs of 15 lily plants cv. "L.A. Glow" (growth stage 14/16) are dipped, in four replications, into an active substance solution containing the active substance 1-4 (cis isomer, formulation: 240 SC) at the concentrations stated and subsequently planted into boxes 40 × 60 cm in size. The bulbs came from a field which was homogeneously infested with the foliar nematode Aphelenchoides fragariae. The number of infested plants is determined by examining leaves under the microscope for foliar nematodes 92 days after the dip treatment,.

| Active substance concentration a.i. (%) | | Infested plants |
|---|---|---|
| 0 (control) | | 8 |
| 1-4 | 0.15 | 0 |
| 1-4 | 0.075 | 0 |
| Comparison: foliar treatment with 150 g/ha 1-4 | | 6 |

## Claims

1. Use of compounds of the formula (I) 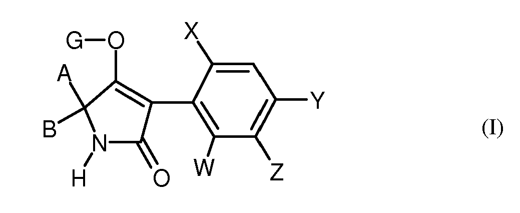 in which
X represents halogen, alkyl, alkoxy, haloalkyl, haloalkoxy or cyano,
W, Y and Z independently of each other represent hydrogen, halogen, alkyl, alkoxy, haloalkenyl, haloalkoxy or cyano,
A represents hydrogen, or represents in each case optionally halogen-substituted alkyl, alkoxyalkyl, saturated, optionally substituted cycloalkyl in which optionally at least one ring atom is replaced by a hetero atom,
B represents hydrogen or alkyl,
or
A and B together with the carbon atom to which they are bonded represent a saturated or unsaturated, unsubstituted or substituted cycle which optionally contains at least one hetero atom,
G represents hydrogen (a) or one of the groups 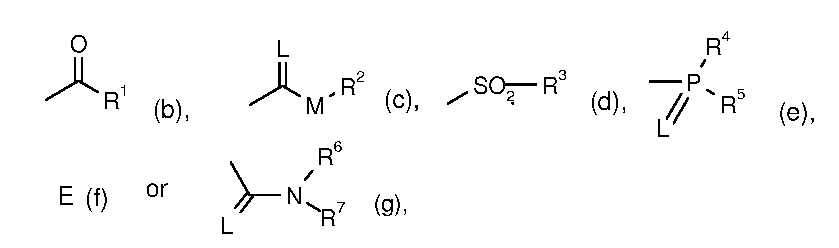 in which
E represents a metal ion or an ammonium ion,
L represents oxygen or sulphur,
M represents oxygen or sulphur,
R¹ represents in each case optionally halogen-substituted alkyl, alkenyl, alkoxyalkyl, alkylthioalkyl, polyalkoxyalkyl or optionally halogen-, alkyl- or alkoxy-substituted cycloalkyl which can be interrupted by at least one hetero atom, in each case optionally substituted phenyl, phenylalkyl, hetaryl, phenoxyalkyl or hetaryloxyalkyl,
R² represents in each case optionally halogen-substituted alkyl, alkenyl, alkoxyalkyl, polyalkoxyalkyl or in each case optionally substituted cycloalkyl, phenyl or benzyl,
R³ represents optionally halogen-substituted alkyl or optionally substituted phenyl,
R⁴ and R⁵ independently of one another represent in each case optionally halogen- substituted alkyl, alkoxy, alkylamino, dialkylamino, alkylthio, alkenylthio, cycloalkylthio, or represent in each case optionally substituted phenyl, benzyl, phenoxy or phenylthio, and
R⁶ and R⁷ independently of one another represent hydrogen, in each case optionally halogen-substituted alkyl, cycloalkyl, alkenyl, alkoxy, alkoxyalkyl, optionally substituted phenyl, optionally substituted benzyl or, together with the N atom to which they are bonded, represent an optionally substituted ring which is optionally interrupted by oxygen or sulphur,
in the form of their isomer mixtures or their pure isomers
for controlling animal pests such as insects and/or spider mites and/or nematodes, where the active substance is applied by dipping.

2. Use according to Claim 1, where the compounds of the formula (I) are defined as follows:
W represents hydrogen, C₁-C₄-alkyl, C₁-C₄-alkoxy, chlorine, bromine or fluorine,
X represents C₁-C₄-alkyl, C₁-C₄-alkoxy, C₁-C₄-haloalkyl, fluorine, chlorine or bromine,
Y and Z independently of one another represent hydrogen, C₁-C₄-alkyl, halogen, C₁-C₄-alkoxy or C₁-C₄-haloalkyl,
A represents hydrogen or in each case optionally halogen-substituted C₁-C₆-alkyl or C₃-C₈-cycloalkyl,
B represents hydrogen, methyl or ethyl,
A,B and the carbon atom to which they are bonded represent saturated C₃-C₆-cycloalkyl in which one ring member is optionally replaced by oxygen or sulphur and which is optionally monosubstituted or disubstituted by C₁-C₄-alkyl, trifluoromethyl or C₁-C₄-alkoxy,
G represents hydrogen (a) or one of the groups 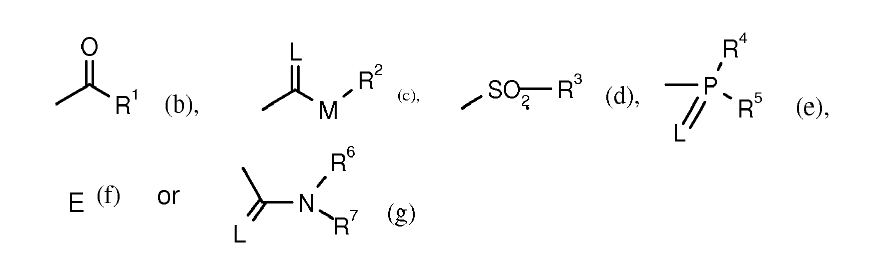 in which
E represents a metal ion or an ammonium ion,
L represents oxygen or sulphur and
M represents oxygen or sulphur,
R¹ represents in each case optionally halogen-substituted C₁-C₁₀-alkyl, C₂-C₁₀-alkenyl, C₁-C₄-alkoxy-C₁-C₄-alkyl, C₁-C₄-alkylthio-C₁-C₄-alkyl, or represents C₃-C₆-cycloalkyl which is optionally substituted by fluorine, chlorine, C₁-C₄-alkyl or C₁-C₂-alkoxy,
or represents phenyl which is optionally substituted by fluorine, chlorine, bromine, cyano, nitro, C₁-C₄-alkyl, C₁-C₄-alkoxy, trifluoromethyl or trifluoromethoxy,
or represents pyridyl or thienyl, each of which is optionally substituted by chlorine or methyl,
R² represents in each case fluorine- or chlorine-substituted C₁-C₁₀-alkyl, C₂-C₁₀-alkenyl, C₁-C₄-alkoxy-C₂-C₄-alkyl, or represents optionally methyl- or methoxy-substituted C₅-C₆-cycloalkyl, or represents phenyl or benzyl, each of which is optionally substituted by fluorine, chlorine, bromine, cyano, nitro, C₁-C₄-alkyl, C₁-C₄-alkoxy, trifluoromethyl or trifluoromethoxy,
R³ represents optionally fluorine-substituted C₁-C₄-alkyl, or represents phenyl which is optionally substituted by fluorine, chlorine, bromine, C₁-C₄-alkyl, C₁-C₄-alkoxy, trifluoromethyl, trifluoromethoxy, cyano or nitro,
R⁴ represents in each case optionally fluorine- or chlorine-substituted C₁-C₄-alkyl, C₁-C₄-alkoxy, C₁-C₄-alkylamino, C₁-C₄-alkylthio or represents phenyl, phenoxy or phenylthio, each of which is optionally substituted by fluorine, chlorine, bromine, nitro, cyano, C₁-C₄-alkoxy, trifluoromethoxy, C₁-C₄-alkylthio, C₁-C₄-haloalkylthio, C₁-C₄-alkyl or trifluoromethyl,
R⁵ represents C₁-C₄-alkoxy or C₁-C₄-thioalkyl,
R⁶ represents C₁-C₆-alkyl, C₃-C₆-cycloalkyl, C₁-C₆-alkoxy, C₃-C₆-alkenyl or C₁-C₄-alkoxy-C₁-C₄-alkyl,
R⁷ represents C₁-C₆-alkyl, C₃-C₆-alkenyl or C₁-C₄-alkoxy-C₁-C₄-alkyl,
R⁶ and R⁷ together represent an optionally methyl- or ethyl-substituted C₃-C₆-alkylene radical in which one carbon atom is optionally replaced by oxygen or sulphur, in the form of their isomer mixtures or their pure isomers.

3. Use according to Claim 1, where the compounds of the formula (I) are defined as follows:
W represents hydrogen, methyl, ethyl, chlorine, bromine or methoxy,
X represents chlorine, bromine, methyl, ethyl, propyl, i-propyl, methoxy, ethoxy or trifluoromethyl,
Y and Z independently of one another represent hydrogen, fluorine, chlorine, bromine, methyl, ethyl, propyl, i-propyl, trifluoromethyl or methoxy,
A represents methyl, ethyl, propyl, i-propyl, butyl, i-butyl, sec-butyl, tert-butyl, cyclopropyl, cyclopentyl or cyclohexyl,
B represents hydrogen, methyl or ethyl, or
A,B and the carbon atom to which they are bonded represent saturated C₆-cycloalkyl in which one ring member is optionally replaced by oxygen and which is optionally monosubstituted by methyl, ethyl, trifluoromethyl, methoxy, ethoxy, propoxy or butoxy,
G represents hydrogen (a) or one of the groups 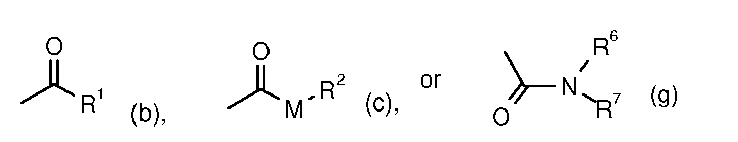 in which
M represents oxygen or sulphur,
R¹ represents C₁-C₈-alkyl, C₂-C₄-alkenyl, methoxymethyl, ethoxymethyl, ethylthiomethyl, cyclopropyl, cyclopentyl or cyclohexyl,
or represents phenyl which is optionally monosubstituted to disubstituted by fluorine, chlorine, bromine, cyano, nitro, methyl, ethyl, methoxy, trifluoromethyl or trifluoromethoxy,
or represents pyridyl or thienyl, each of which is optionally substituted by chlorine or methyl,
R² represents C₁-C₈-alkyl, C₂-C₄-alkenyl, methoxyethyl, ethoxyethyl, or represents phenyl or benzyl,
R⁶ and R⁷ independently of one another represent methyl or ethyl or together represent a C₅-alkylene radical in which the C₃-methylene group is replaced by oxygen,
in the form of their isomer mixtures or their pure isomers.

4. Use according to Claim 1, where the compounds of the formula (I) are defined as follows:
W represents hydrogen or methyl,
X represents chlorine, bromine or methyl,
Y and Z independently of one another represent hydrogen, chlorine, bromine or methyl,
A, B and the carbon atom to which they are bonded represent saturated C₆-cycloalkyl in which one ring member is optionally replaced by oxygen and which is optionally monosubstituted by methyl, trifluoromethyl, methoxy, ethoxy, propoxy or butoxy,
G represents hydrogen (a) or one of the groups 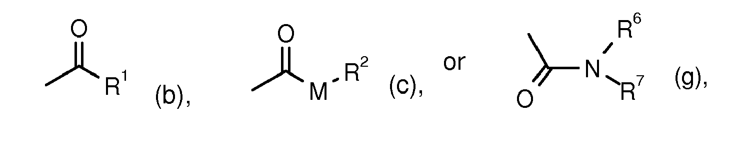 in which
M represents oxygen or sulphur,
R¹ represents C₁-C₈-alkyl, C₂-C₄-alkenyl, methoxymethyl, ethoxymethyl, ethylthiomethyl, cyclopropyl, cyclopentyl, cyclohexyl or
represents phenyl which is optionally monosubstituted by fluorine, chlorine, bromine, methyl, methoxy, trifluoromethyl, trifluoromethoxy, cyano or nitro,
or represents pyridyl or thienyl, each of which is optionally substituted by chlorine or methyl,
R² represents C₁-C₈-alkyl, C₂-C₄-alkenyl, methoxyethyl, ethoxyethyl, phenyl or benzyl,
R⁶ and R⁷ independently of one another represent methyl or ethyl or together represent a C₅-alkylene radical in which the C₃-methylene group is replaced by oxygen
in the form of their isomer mixtures or their pure isomers.

5. Use according to Claim 1, where the compound of the formula (I) is selected from among the following compounds 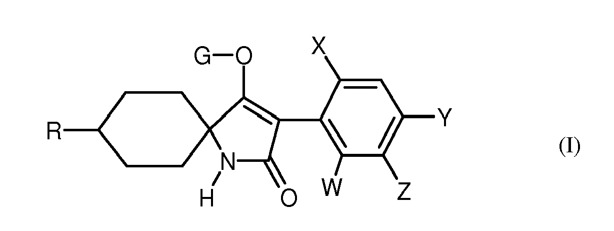
| **W** | **X** | **Y** | **Z** | **R** | **G** |
|---|---|---|---|---|---|
| H | Br | H | CH₃ | OCH₃ | CO-i-C₃H₇ |
| H | Br | H | CH₃ | OCH₃ | CO₂-C₂H₅ |
| H | CH₃ | H | CH₃ | OCH₃ | H |
| H | CH₃ | H | CH₃ | OCH₃ | CO₂-C₂H₅ |
| CH₃ | CH₃ | H | Br | OCH₃ | H |
| CH₃ | CH₃ | H | Cl | OCH₃ | H |
| H | Br | CH₃ | CH₃ | OCH₃ | CO-i-C₃H₇ |
| H | CH₃ | Cl | CH₃ | OCH₃ | CO₂C₂H₅ |
| CH₃ | CH₃ | CH₃ | CH₃ | OCH₃ | H |
| CH₃ | CH₃ | H | Br | OC₂H₅ | CO-i-C₃H₇ |
| H | CH₃ | CH₃ | CH₃ | OC₂H₅ | CO-n-C₃H₇ |
| H | CH₃ | CH₃ | CH₃ | OC₂H₅ | CO-i-C₃H₇ |
| H | CH₃ | CH₃ | CH₃ | OC₂H₅ | CO-c-C₃H₅ |

6. Use according to Claim 1, where the compound of the formula (I) has the following structure 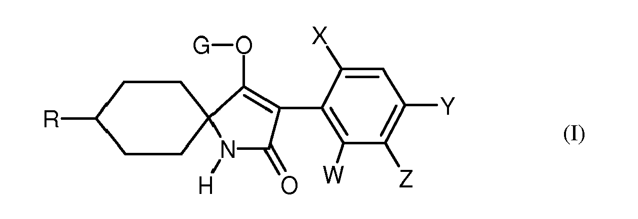
| **W** | **X** | **Y** | **Z** | **R** | **G** |
|---|---|---|---|---|---|
| H | CH₃ | H | CH₃ | OCH₃ | CO₂-C₂H₅ |

7. Use according to Claim 1, where the compound has the following structure

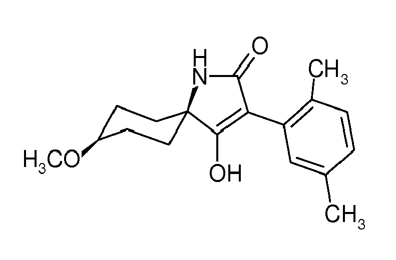

8. Use according to Claim 1, where the compound has the following structure

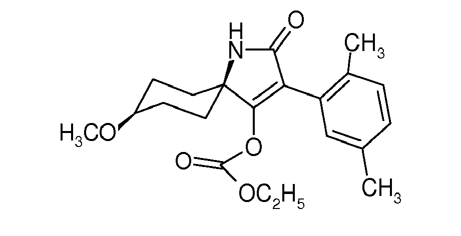

9. Use according to one or more of Claims 1 to 8, where the plant to be treated is grown in an artificial growth substrate.

10. Use according to Claim 9, where the artificial growth substrate is selected from the group consisting of rock wool, glass wool, quartz sand, gravel, expanded clay and vermiculite.

11. Use according to one or more of Claims 1 to 10, where the plant to be treated is planted in a closed system.

12. Use according to one or more of Claims 1 to 11, where the plant to be treated is selected from the group consisting of vegetables, spices, ornamentals, conifers, cotton, citrus plants, fruit, tropical crops, nuts and grape vines.

13. Use according to one or more of Claims 1 to 12, where the active substance is applied by dipping roots, tubers or bulbs.

14. Use according to one or more of Claims 1 to 13 for controlling pests from the family Aphididae.

15. Use according to one or more of Claims 1 to 13 for controlling pests from the family Phemphigidae.

16. Use according to one or more of Claims 1 to 13 for controlling pests from the family Tetranychidae.

17. Use according to one or more of Claims 1 to 13 for controlling pests from the family Tarsonemidae.

18. Use according to one or more of Claims 1 to 13 for controlling pests from the family Thripidae.

19. Use according to one or more of Claims 1 to 13 for controlling pests from the family Aleyrodidae.

20. Use according to one or more of Claims 1 to 13 for controlling pests from the family Coccidae.

21. Use according to one or more of Claims 1 to 13 for controlling pests from the family Pseudococcidae.

22. Use according to one or more of Claims 1 to 13 for controlling pests from the family Agromyzidae.

23. Use according to one or more of Claims 1 to 13 for controlling pests from the family of the Aphelenchoididae.
